(19) Europäisches Patentamt
European Patent Office
Office européen des brevets

(11) **EP 2 195 696 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(51) Int Cl.:
***G02B 21/00*** *(2006.01)*  ***G02B 21/06*** *(2006.01)*
***G02B 27/58*** *(2006.01)*

(21) Anmeldenummer: **08802656.2**

(22) Anmeldetag: **26.09.2008**

(86) Internationale Anmeldenummer:
**PCT/EP2008/008205**

(87) Internationale Veröffentlichungsnummer:
**WO 2009/043546 (09.04.2009 Gazette 2009/15)**

(54) **VERFAHREN UND ANORDNUNG ZUR OPTISCHEN ERFASSUNG EINER BELEUCHTETEN PROBE**

METHOD AND ARRANGEMENT FOR OPTICALLY DETECTING AN ILLUMINATED SAMPLE

PROCÉDÉ ET DISPOSITIF DE DÉTECTION OPTIQUE D'UN ÉCHANTILLON ÉCLAIRÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 DE 102007047466**

(43) Veröffentlichungstag der Anmeldung:
**16.06.2010 Patentblatt 2010/24**

(73) Patentinhaber: **Carl Zeiss Microscopy GmbH 07745 Jena (DE)**

(72) Erfinder:
• **SCHWERTNER, Michael RH2 7DU Reigate (GB)**
• **KEMPE, Michael 07751 Jena (DE)**
• **WOLLESCHENSKY, Ralf 07743 Jena (DE)**

(74) Vertreter: **Loritz, Rainer et al Carl Zeiss AG Konzernfunktion Recht und Patente Patentabteilung Jena Carl-Zeiss-Promenade 10 07745 Jena (DE)**

(56) Entgegenhaltungen:
WO-A-2007/043313     WO-A-2007/043314
WO-A-2007/043382     WO-A2-01/44854
US-A1- 2007 206 276

EP 2 195 696 B1

## Beschreibung

Strukturierte Beleuchtung wird in der Mikroskopie zur Tiefendiskriminierung im Weitfeld [1] und zur Auflösungs- und Kontraststeigerung [2] eingesetzt. Im Allgemeinen wird dabei ein Gitter oder eine andere periodische Struktur in die Probe projiziert [3] oder durch Interferenz kohärenter Teilstrahlen ein Interferenzmuster in der Probe erzeugt [4]. Durch Verschiebung der Beleuchtungsstruktur voneinander verschiedene Bilder werden anschließend in geeigneter Weise miteinander verrechnet, um ein optisches Schnittbild bzw. ein Bild mit erhöhtem Kontrast und erhöhter Auflösung zu gewinnen [5, 6].

Alle diese Verfahren haben gemeinsam, dass verschiedene Phasenlagen der periodischen Struktur in die Probe projiziert werden, wobei man die Phasenlage möglichst genau kontrollieren und auch schnell zwischen verschiedenen Einstellungen der Phasenlage wechseln möchte. Eine ungenaue Verschiebung der projizierten Struktur kann zu Artefakten (wie z.B. Streifenbildung) in der Abbildung führen. Die Genauigkeit, Geschwindigkeit, Reproduzierbarkeit und Kalibrierbarkeit der Einstellung der Phasenlage ist deshalb ein entscheidendes Merkmal zur Implementierung eines solchen Verfahrens zur strukturierten Beleuchtung.

Zusätzlich wird bei einigen Implementierungen des Verfahrens der Strukturierten Beleuchtung, insbesondere bei der hochauflösenden Variante [7], eine Drehung der Orientierung der projizierten Struktur benötigt.

US 2007/0206276 A1 und WO 2007/043382 A1 (& EP 1 933 186 A1) beschreiben Anordnungen zur optischen Erfassung einer beleuchteten Probe gemäß dem Stand der Technik.

## Beschreibung der Erfindung

Der Umfang der Erfindung wird durch die beigefügten Ansprüche definiert.

Die Erfindung und andere Ausgestaltungen, die nicht Teil der Erfindung sind, betreffen eine Implementierung eines Verfahrens zur strukturierten Beleuchtung. Im Vergleich zum Stand der Technik ist die vorgeschlagene Anordnung vereinfacht und kann vorteilhaft eine hohe Abtastgeschwindigkeit ermöglichen. Zusätzlich hängt in dieser Ausgestaltungen die Präzision der Phasenverschiebung der periodischen Struktur nicht mehr kritisch von der Präzision der verwendeten Stellglieder ab. Gemäß bestimmten Ausgestaltungen wird die Präzision einzig durch die Qualität eines Phasenelementes vorgegeben. Dies ist ein entscheidender Vorteil gegenüber dem Stand der Technik und macht die wiederholte Neukalibrierung der Anordnung überflüssig und kann bei der Reduzierung von Artefakten helfen. Weiterhin kann die vorgeschlagene Anordnung mit einem Bereich von Wellenlängen arbeiten, wobei Phasenverschiebung und auch Orientierung der projizierten Struktur mit nur einem einzigen mechanischen Aktuator eingestellt werden können.

Im Folgenden werden zur Einführung die zugrunde liegenden Prinzipien beschrieben, bevor Ausführungsbeispiele entsprechend der Erfindung im Detail erläutert werden.

In der Literatur (siehe hinten) unterscheidet man zwei Arten der Strukturierten Beleuchtung, wobei die erste zur Steigerung der lateralen Auflösung verwendet werden kann und auch die Änderung der Orientierung der im Objektraum erzeugten Beleuchtungsstruktur (z.B. einer Linienstruktur) erforderlich ist. Die zweite Form der strukturierten Beleuchtung kann zur Erzeugung optischer Schnitte eingesetzt werden, ohne dass eine Steigerung der lateralen Auflösung erreicht wird (Zeiss APOTOM). Die vorliegende Erfindung ist für beide Arten der strukturierten Beleuchtung oder auch Kombinationen daraus nutzbar.

Den Anordnungen entsprechend der Erfindung liegt die Beobachtung zugrunde, dass eine periodische Struktur (wie zum Beispiel ein Gitter), welche sich in einer zur Probe konjugierten Ebene befindet und eine strukturierte Beleuchtung in der Probe erzeugt, eine Beugungsverteilung in der Pupille des Objektives erzeugt. Weiterhin wird die Erkenntnis genutzt, dass eine direkte Manipulation der Beugungsordnungen in der Pupille die Gestalt der produzierten Beleuchtungsstruktur in der Probe bestimmt. Die Manipulation der Beugungsordnungen kann hier folgendes beinhalten: die Selektion bzw. Unterdrückung bestimmter Ordnungen, die Rotation der Beugungsordnungen in der Pupillenebene um die optische Achse der Anordnung, oder auch die Einstellung der relativen Phase zwischen den Beugungsordnungen, bevor sie in die Pupille des verwendeten Objektives gelangen.

Durch Selektion oder Rotation der Beugungsordnungen in der Pupille kann die Orientierung der Beleuchtungsstruktur beeinflusst werden. Die relative Phasenlage zwischen den Beugungsordnungen steuert dabei die Phasenlage der strukturierten Beleuchtung.

Im Folgenden sollen die Erfindung und andere Ausgestaltungen, die nicht Teil der Erfindung sind, anhand von Ausführungsbeispielen erläutert werden.

In einem ersten Ausführungsbeispiel wird eine Implementierung gewählt, welche zusätzlich zur Einstellung der Phasenlage eine Änderung der Orientierung der projizierten Struktur in der Probe ermöglicht und in einem gewissen Bereich unabhängig von der Wellenlänge des verwendeten Lichtes der projizierten Struktur ist. Die Eigenschaft der Wellenlängenunabhängigkeit und die Möglichkeit zur Einstellung der Orientierung sind nicht für alle Anwendungen bzw. Implementierungen notwendig. Die Implementierung dieser zusätzlichen Eigenschaften ist deshalb optional. Die Erfindung beinhaltet die kombinierte Implementierung aller drei Eigenschaften (Phasenverschiebung, Orientierungsänderung, Wellenlängenunabhängigkeit), ist jedoch nicht auf diese Kombination beschränkt.

Als erste Maßnahme wird in einer zur Probe konjugierten Zwischenbildebene eine periodische Struktur eingefügt. Vorzugsweise ist dies eine periodische Phasenstruktur. Also einfachste Ausführung kann es sich hier um ein Phasengitter (Liniengitter) handeln, aber auch zweidimensionale Strukturen sind denkbar.

Im Folgenden wird eine Ausgestaltung, die nicht Teil der Erfindung ist, anhand einer Implementierung erläutert, welche die Orientierung der Beleuchtungsstruktur in N/2=3 Richtungen ermöglicht, wobei durch geeignetes Design eine andere Anzahl vor Orientierungen ebenfalls möglich ist.

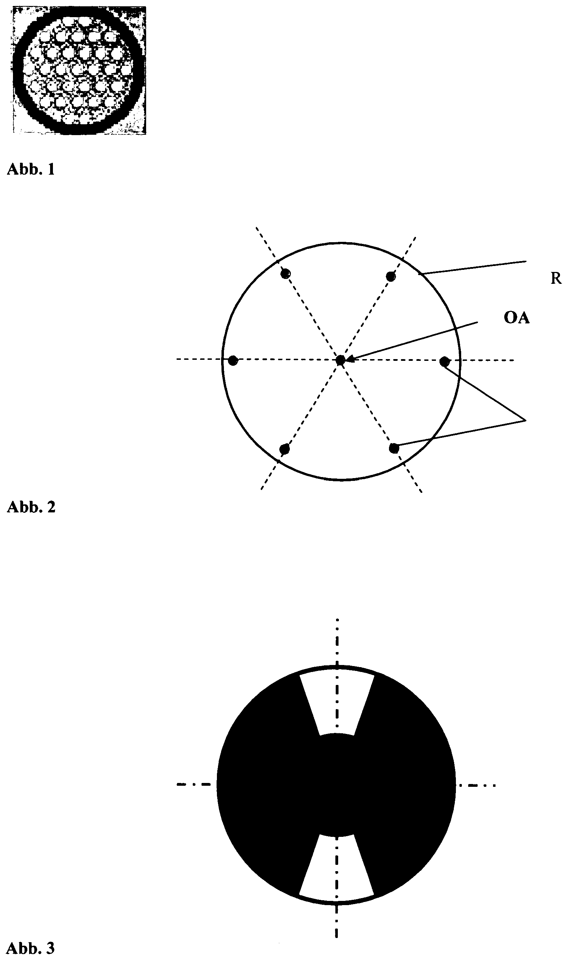

Als periodische Struktur kann ein zwei-dimensionales Gitter verwendet werden, wie es in Abbildung 1 dargestellt ist.

Abb. 1 zeigt eine in einer zur Probe konjugierten Zwischenbildebene angeordnete Struktur (Phasenstruktur, Wabenstruktur), in diesem Fall mit einer N=6-fachen Symmetrie. Der Kreisring kennzeichnet die Ausleuchtung.

Die in Abbildung 1 dargestellte Struktur erzeugt in der Pupille ein Beugungsmuster, ebenfalls mit 6-facher Symmetrie der Beugungsordnungen, wobei gegenüberliegende Paare der Beleuchtung jeweils der Orientierung einer Struktur in einer Raumrichtung entsprechen. Eine typische Beleuchtungsverteilung in der Pupille des Objektives oder einer dazu konjugierten Ebene ist in Abbildung 2 dargestellt.

Die durch die in Abbildung 1 dargestellte Struktur in der Pupille erzeugte Lichtverteilung. Die eingezeichneten Punkte P sind die Orte der Beugungsordnungen und der Ring R zeigt die Begrenzung der Pupille an. Die 0. Beugungsordnung liegt dabei vorzugsweise auf der optischen Achse OA. Bei N=6-facher Symmetrie würde eine Rotation des Beleuchtungsmusters um φ=360 / N = 60 Grad um die optische Achse die Ausgangsstruktur reproduzieren. Die gestrichelten Linien verbinden jeweils die Beugungsordnungen, die zur Strukturierung in einer Raumrichtung führen.

Nun wird ein weiteres Element in der Nähe der Pupille bzw. einer dazu konjugierten Ebene angebracht. Gemäß dieser Ausgestaltung besteht dieses Element aus einer Blende, welche im Folgenden genauer beschrieben wird Aufgabe dieser Blende ist die Selektion von bestimmten Beugungsordnungen bzw. deren Unterdrückung.

Eine solche Blendenstruktur ist in Abb. 3 dargestellt. Sie enthält zwei gegenüber der optischen Achse symmetrisch angeordnete Öffnungen, wobei die Größe der von diesen Öffnungen eingenommenen Winkelsegmenten in etwa dem durch die Symmetrie des Beugungsmusters vorgegebenen Winkel

$$\varphi = 360 \ / \ N$$

entspricht oder geringfügig größer ist. Die beiden Öffnungen sind in der Abb. 3 weiß dargestellt, die Kreissegmente entsprechen einem Winkel von φ. Die optische

Achse befindet sich am Schnittpunkt der gestrichelt eingezeichneten Symmetrieachsen.

Blendenstruktur, welche mit einer Phasenstruktur kombiniert werden kann und in der Pupille oder einer dazu konjugierten Ebene angeordnet ist.

Gemäß dieser Ausgestaltung werden durch die Blende nur bestimmte, im Beugungsbild in der Pupille in Bezug auf die optische Achse gegenüberliegende Beugungsordnungen selektiv je nach Blendeneinstellung transmittiert. Durch eine Rotation der Blende können somit bestimmte Beugungsordnungen selektiert und die Orientierung der Beleuchtungsstruktur in der Probe beeinflusst werden.

Als Alternative zur Nutzung der in Abbildung 3 dargestellten Blendenstruktur in Kombination mit dem in Abb. 1 dargestellten, zweidimensionalen Gitter kann auch ein vorzugsweise nur in einer Dimension strukturiertes Gitter (z.B. ein Liniengitter), das ein Punktpaar (je nach Gitterart mit oder ohne der 0. Ordnung) wie in Fig.2 erzeugt, in einer zur Probe konjugierten Lage eingesetzt und um die optische Achse gedreht werden. Diese Anordnung hat im Vergleich zur Kombination aus 2D Gitter und Blende zur Selektion von Beugungsordnungen eine erhöhte Lichtausbeute, benötigt im Vergleich zu einem der folgenden Ausführungsbeispiele ein zusätzliches Stellglied zur Rotation des Gitters. Die Verschiebung der Phasenlage erfolgt dabei ebenfalls wie nachfolgend für die Kombination ans 2D Gitter und Blende beschrieben.

Im Folgenden wird die Manipulation der relativen Phase der Beugungsordnungen erläutert, wie sie zur Verschiebung der periodischen Struktur in der Probe genutzt werden kann.

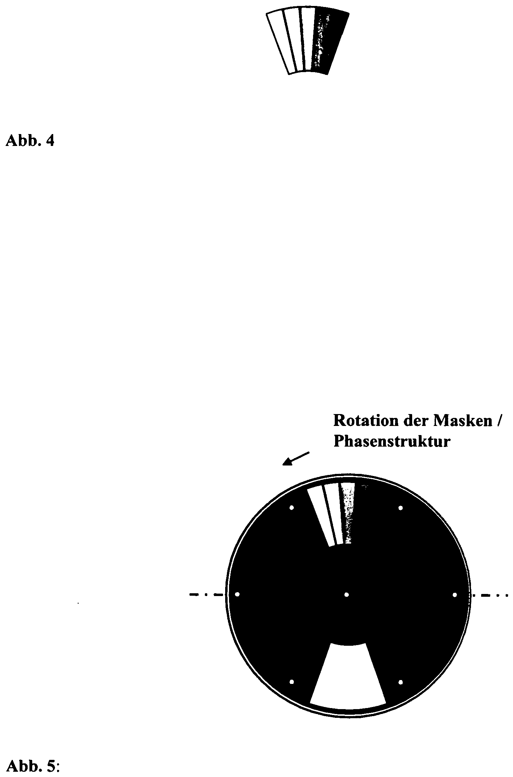

Entsprechend dieser Ausgestaltung wird zusätzlich eine strukturierte Phasenplatte genutzt. Diese kann sich auf einem separaten Element in der Nähe der Pupille befinden oder aber in eine oder beiden in Abb. 3 dargestellten Öffnungen der Blende eingefügt werden. Ohne Beschränkung der Allgemeinheit wird hier der Einsatz von nur einer Phasenplatte beschrieben, welche in die obere Öffnung der Maske aus Abb. 3 eingesetzt wird und mit der Blende zusammen eine Funktionseinheit bildet. Eine solche integrierte Kombination aus Phasenplatte und Blende ist in Abb. 4 dargestellt.

Abb. 4 zeigt eine Phasenstruktur, welche in die obere Öffnung der in Abb. 3 dargestellten Blende eingesetzt wird. Die unterschiedlichen Grauwerte der äquidistant aufgeteilten Kreissektoren entsprechen verschiedenen Phasenverzögerungen mit fest vordefinierten Schritten. Für eine gegebene Wellenlänge λ ist der Phasenunterschied zwischen zwei benachbarten Kreissektoren

$$\delta = 2\pi \ / \ P,$$

wobei der Phasenunterschied $2\pi$ einer optischen Wegdifferenz von λ entspricht.

Im Minimum hat die Phasenstruktur drei unterschiedliche Phasen, die drei Einstellschritten entsprechen (ohne 0. Ordnung). Mit 0. Ordnung, die durch eine Öffnung in der Mitte der Blende (nicht gezeigt in Abb. 3 und analogen folgenden Abbildungen) auf der Probe sind mindestens 5 Phasen erforderlich.

In Abb. 4 ist ein Phasenelement für P=5 Phasenschritte dargestellt, welches 5 Sektoren enthält. In einer vorteilhaften Ausprägung dieser Ausgestaltung haben die Winkelsegmente des Phasenelementes eine Unterteilung in Winkelsegmente der Größe

$$\gamma = \varphi \, / \, P.$$

Die Maske mit der Phasenstruktur, wie sie in der Pupille angeordnet ist, wird in Abb. 5 dargestellt. Maske und Phasenstruktur sind starr miteinander verbunden und drehbar um die optische Achse gelagert.

Abb. 5 zeigt die Anordnung der Masken / Phasenstruktur in der Pupille. Der Pupillenrand ist dabei mit dem roten Kreis gekennzeichnet. Die Orte der Beugungsorte in der Pupille sind wie in Abb. 2 grün gekennzeichnet.

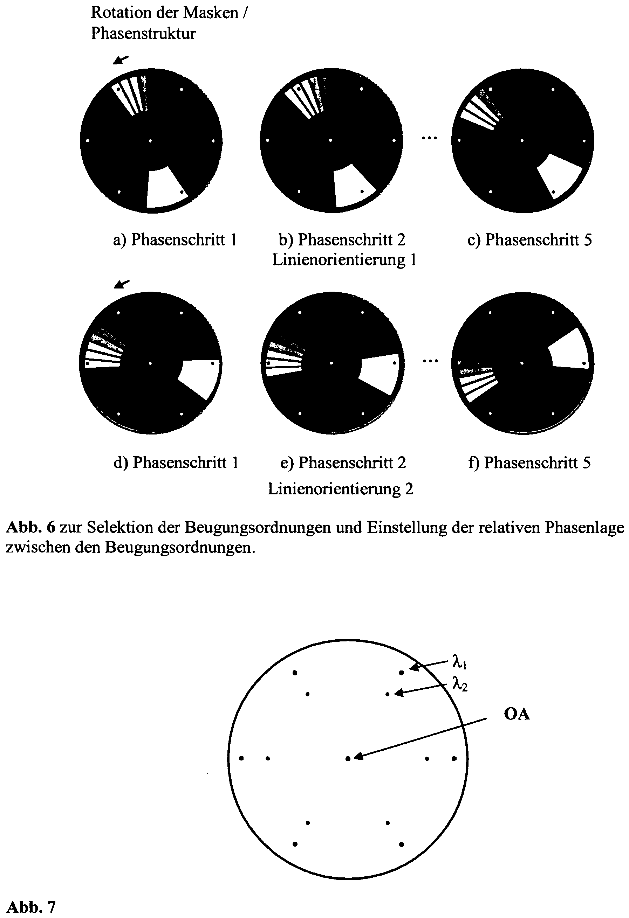

Durch Rotation der in Abb. 5 dargestellten Struktur in der Pupillenebene werden die Beugungsordnungen in der Pupille selektiert. Nur die gegenüberliegenden Ordnungen (symmetrisch) passieren die Maske, alle anderen Ordnungen treffen intransparente Gebiete der Maske. Dadurch wird die Orientierung der in der Probe erzeugten Struktur eingestellt. Weiterhin wird durch kleinere Rotationsschritte zwischen zwei Kreis-Segmenten des Phasenelementes gewechselt. Dadurch wird die relative Phasendifferenz der durch die zwei gegenüberliegenden Öffnungen der Maske verstellt. Diese Funktionsweise wird in Abbildung 6 veranschaulicht.

Abb. 6 zeigt die Selektion der Beugungsordnungen und Einstellung der relativen Phasenlage zwischen den Beugungsordnungen.

Die in der Probe erzeugte Linienverteilung hat in den Teilbildern a) bis c) eine Orientierung 1 und in den Teilbildern d) bis f) eine Orientierung 2, weil jeweils anderen Paare von Beugungsordnungen durch die Maske passieren können. Weiterhin sind jeweils 3 verschiedenen Phasenschritte der erzeugten Struktur dargestellt, da die durch die zwei Öffnungen der Maskenstruktur transmittierten Beugungsordnungen eine unterschiedliche relative Phasenverschiebung erfahren, je nachdem, in welchem Sektor der Phasenplatte sich die Beugungsordnungen befinden. Zur Einstellung des Phasenschrittes sind nur kleine Verstellwege notwendig, wodurch eine hohe Geschwindigkeit erreicht werden kann. Zusätzlich kann durch eine kontinuierliche Rotation des Elementes eine entsprechende Sequenz aus Phasenschritten und Orientierungen der Struktur durchlaufen werden, wobei eine Synchronisierung der Winkelposition des Elementes mit der Bildaufnahme durch Nutzung eines entsprechenden Winkelgebers erfolgen kann.

Es ist hervorzuheben, dass die Präzision der relativen Phasenverstellung nicht entscheidend von der Präzision (Winkelauflösung) der Verstellung der Phasenplatte bzw. Maske abhängt. Dies ist ein entscheidender Vorteil gegenüber dem Stand der Technik [8,9], da bei der vorliegenden Ausgestaltung die Präzision der relativen Phasenschritte nur noch von der Qualität der Phasenplatte abhängt. Damit ist weder eine Kalibrierung notwendig noch eine Dejustierung möglich. Durch die Winkelpositionierung muss lediglich sicher gestellt werden, dass sich die beiden Beugungsordnungen im jeweils korrekten Sektor der Phasenplatte befinden. Die dazu erforderliche Stellpräzision und Reproduzierbarkeit ist vergleichsweise gering. In einer vorteilhaften Ausprägung dieser Ausgestaltung kann diese Aufgabe deshalb durch einen herkömmlichen Schrittmotor gelöst werden. Im Vergleich zum Stand der Technik [9,8] werden zur Phasenverstellung weder Piezo-Aktuatoren oder Galvo-Scanner benötigt. Dies ist ein Kostenvorteil.

Die bisher erläuterte Anordnung entsprechend der Erfindung weist eine Abhängigkeit von der verwendeten Lichtwellenlänge auf und ist deshalb vorzugsweise mit monochromatischem Licht zu betreiben. Entsprechend der vorliegenden Ausgestaltung kann die vorgeschlagene Anordnung derart modifiziert werden, dass sie für einen gesamten Bereich Wellenlängen arbeitet. Diese chromatische Korrektur soll nun näher erläutert werden.

Entsprechend Abbildung 7 betrachten wir zuerst die Auswirkungen einer zur ersten Wellenlänge (grün markierte Beugungsordnungen) blau-verschobenen, zweiten Wellenlänge (blau markierte Beugungsordnungen). Hier werden die kleineren Wellenlängen weniger stark gebeugt und befinden sich deshalb in einer kleineren radialen Entfernung von der optischen Achse.

Abb. 7 zeigt die durch die in Abbildung 1 erzeugte Beugungsverteilung in der Pupille. Die dichter an der Achse liegenden Punkte sind die Orte der Beugungsordnungen der längeren Wellenlänge $\lambda_1$ während die weiter außen liegenden Punkte Orte der Beugungsordnungen der kürzeren Wellenlänge $\lambda_2$ markieren. Der Ring zeigt die Begrenzung der Pupille an. Die 0. Beugungsordnung liegt dabei vorzugsweise auf der optischen Achse OA.

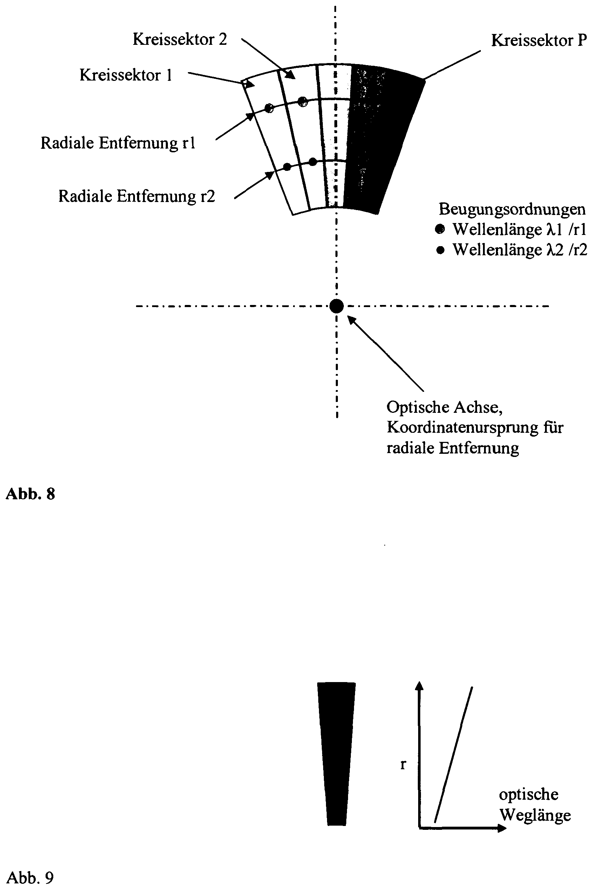

Eine chromatische Korrektur der Anordnung kann nun durch eine zusätzliche radiale Abhängigkeit der Phasenverzögerung der in Abbildung 4 realisierten Phasenplatte implementiert werden. Dies ist in Abbildung 8 illustriert. Die radiale Abhängigkeit wird dabei derartig gewählt, dass beim Wechsel zum nächsten Sektor (durch Rotation des Elementes) für jede Wellenlänge der gleiche, korrekte Phasensprung, auf die jeweilige Wellenlänge bezogen, entsteht.

Abb. 8 zeigt eine modifizierte Phasenplatte, welche eine chromatische Korrektur ermöglicht (siehe Text).

Die Beugungsordnungen der Wellenlängen $\lambda 1$ und $\lambda 2$ befinden sich in unterschiedlichen radialen Abständen r1 und r2 von der optischen Achse innerhalb einer zur Pupille konjugierten Ebene. Wie zuvor erwähnt wird die Lichtverteilung in der Pupille durch das in der Abbildung 1 illustrierte Element erzeugt. Es gilt (siehe Abb. 8):

$$\lambda 1 > \lambda 2 \text{ sowie } \lambda 1 / \lambda 2 = r1/r2.$$

In Abb. 8 wird das Beispiel einer Phasenplatte mit P=5 Phasenschritten dargestellt. Demzufolge muss für eine beliebige Wellenlänge $\lambda$, deren Beugungsordnung sich im Abstand r befindet, für die durch die Phasenplatte erzeugte optische Wegdifferenz OPD gelten:

$$OPD = \lambda / P.$$

Daraus folgt, dass die Phasenplatte zur chromatischen Korrektur eine optische Wegdifferenz haben muss, die proportional zum Radius r sein muss. Gemäß dieser Ausgestaltung kann die radiale Abhängigkeit der Phasenplatte kontinuierlich oder quasi-kontinuierlich sein. Bei Verwendung einer diskreten Anzahl fester Wellenlängen kann die radiale Abhängigkeit der Phaseplatte auch stückweise konstant sein.

Ein Beispiel für eine chromatische Korrektur der Phasenplatte für eine beliebige Verteilung von Wellenlängen ist in Abb. 9 zu illustrieren. Hier ist nur ein einzelner Sektor der Phasenmaske gezeigt, die Grauwerte stellen die ortsabhängige optische Weglänge dar, die z.B. durch eine variable Plattendicke oder einen geeigneten Brechzahlverlauf realisiert sein kann und welche direkt proportional zum radialen Abstand r ist.

Abb. 9 zeigt die radiale Abhängigkeit der Phasenmaske zur chromatischen Korrektur der Anordnung. Die optische Weglänge ändert sich (vorzugsweise) linear mit dem Radius.

Es muss betont werden, dass die chromatische Korrektur wie oben beschrieben eine sinnvolle aber keineswegs notwendige Eigenschaft einer Anordnung zur strukturierten Beleuchtung ist. Mit einer geeigneten Kalibrierung können die wellenlängenabhängigen Phasenschritte bestimmt und in den Algorithmen entsprechend berücksichtigt werden.

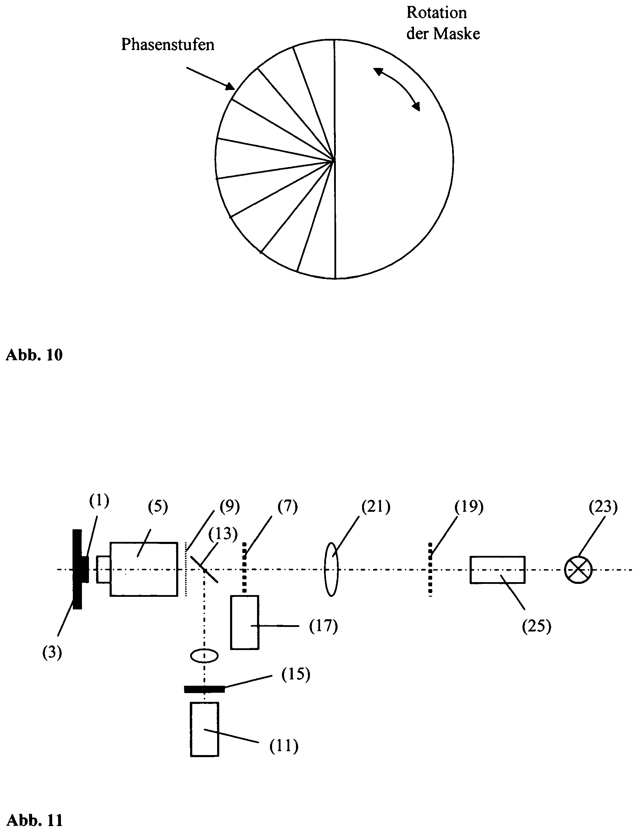

Unter anderem aus energetischen Gründen kann es zweckmäßig sein, nicht alle bis auf zwei Beugungsordnungen in der Pupille mit Hilfe einer Blende zu blockieren, wie bisher beschrieben. In diesem Fall ist es möglich, gleichzeitig eine Strukturierung in all den Raumrichtungen zu gestatten, die vom Element in der Zwischenbildebene durch Beugung erzeugt werden. Die Anzahl der bei verschiedenen Phasenlagen aufzunehmenden Bilder bleibt dabei im Vergleich zur sequentiellen Aufnahme der Bilder mit verschiedenen Strukturierungsrichtungen gleich. Die entsprechenden Phasenlagen können nun durch den Austausch des in Abb. 5 dargestellten Elements durch ein vollständig transparentes (Phasen-) Element wie exemplarisch in Abb. 10 dargestellt eingestellt werden.

Abb. 10 zeigt ein modifiziertes Phasenelement in oder in der Nähe der Pupillenebene (oder einer dazu konjugierten Ebene) für die oben erwähnte gleichzeitige Strukturierung in mehreren Raumrichtungen. Durch die Rotation der dargestellten Maske werden die Phasenlagen der Strukturierungsrichtungen eingestellt. Die Anzahl der Phasenschritte ist dabei N/2*P. Mit der Struktur von Abb. 1 (N = 6) und mit P = 3 erhält man 9 Phasenstufen. Jedes Segment kann wie oben beschrieben einen radialen Phasenverlauf haben, um für verschiedene Farben äquidistante Phasenschritte zu ermöglichen.

Im Folgenden soll eine typische Anordnung für die Fluoreszenzmikroskopie anhand von Abbildung 11 erläutert werden. Die Probe (1) ist auf einem positionierbaren Probenhalter (3) vor dem Mikroskopobjektiv (5) angebracht. Die beschriebenen und auch in Abbildungen 5 bzw. 10 dargestellten Elemente mit Phasenstruktur (7) sind in der Nähe der Pupille (9) des Mikroskopobjektives (5) oder einer dazu konjugierten Ebene angeordnet. Des Weiteren ist ein Flächendetektor (11) (z.B. ein CCD) vorhanden. Bei der hier beschriebenen Anordnung für die Fluoreszenz-Detektion sind ein Hauptfarbteiler (13) zur Trennung von Fluoreszenzlicht und Anregungslicht sowie ein Emissionionsfilter (15) vorgesehen. Die Maske (7) kann mit einem Aktuator (17) bewegt werden, wobei es sich um einen Schrittmotor zur Rotation der Maske oder auch einen Linearantrieb handeln kann. Ein Schrittmotor kann dabei eine runde Maske direkt oder aber indirekt, über ein Getriebe oder eine andere mechanische Einheit antreiben. Eine weitere Maske (19) steht in einer durch die Tubuslinse (21) erzeugten Zwischenbildebene, welche konjugiert zur Probenebene (1) ist. Die Lichtquelle (23) beleuchtet das Element (19) und kann zum Beispiel ein Laser, eine LED, eine Quecksilber-Hochdrucklampe oder eine konventionelle Glühlampe sein. Zusätzlich kann eine optionale Kollimationsoptik (25) vorgesehen werden. Die Lichtquelle (23) kann monochromatisch sein oder mehrere Wellenlängen simultan oder auch zeitsequentiell emittieren.

Bei einer bevorzugten Implementierung dieser Ausgestaltung befinden sich die Phasenmaske und auch die Blende zur Selektion in oder in der Nähe der Pupille des Objektivs. Konstruktionsbedingt ist die Pupille jedoch bei vielen Mikroskopobjektiven nicht direkt zugänglich. In diesem Fall kann eine Zwischenabbildung mit einer Relay-Optik in eine frei zugängliche Zwischenbildebene erfolgen, in deren Nähe Phasenmaske bzw. Blende angeordnet werden können.

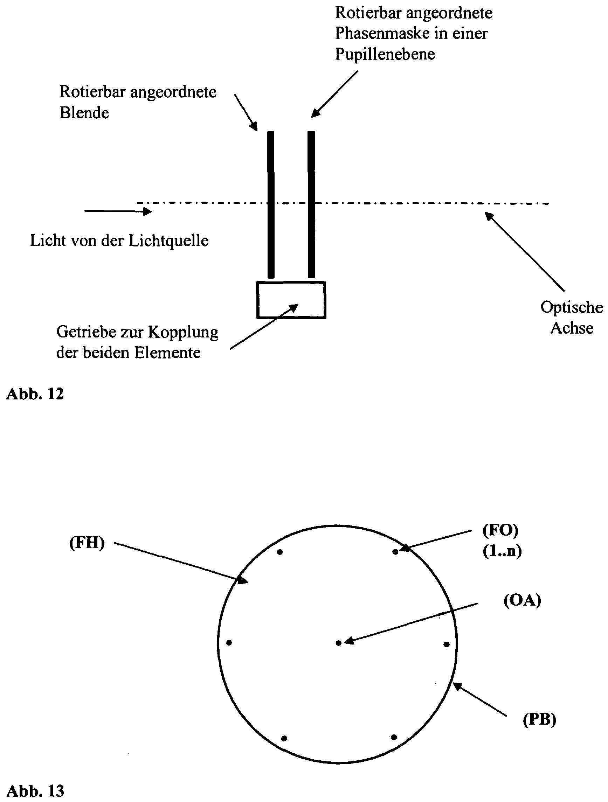

In Abhängigkeit davon, wie weit sich die Phasenmaske von der Pupillenebene entfernt befindet, wird sich der Durchmesser der einzelnen Beugungsordnungen (siehe Abb. 2) mit dem Abstand zur Pupillenebene vergrößern. Die Ausdehnung der Beugungsordnungen in tangentialer Richtung definiert und limitiert somit auch die Mindestgröße der Sektoren der Phasenplatte (siehe Abbildung 5). Gemäß dieser Ausgestaltung kann dieses Problem in einer vorteilhaften Anordnung gelöst werden, in welcher sich die Blende zur Selektion der Beugungsordnungen und das Phasenelement auf zwei verschiedenen, starr miteinander gekoppelten Elementen befinden, wobei beide Elemente drehbar um die optische Achse angeordnet sind, wobei ein Getriebe die beiden Elemente koppelt und das Verhältnis zwischen den Rotationsgeschwindigkeiten festlegt. Eine solche Anordnung ist in einer Seitenansicht senkrecht zur Optischen Achse in Abb. 12 illustriert. Diese Anordnung hat den Vorteil, dass eine Blende mit relativ kleiner Öffnung in Kombination mit einem Phasenelement mit relativ großen Winkelsegmenten kombiniert werden kann und zur Bewegung beider Elemente nur ein einzelner Aktuator (z.B. Schrittmotor) notwendig ist. Die chromatische Korrektur in radialer Richtung wird ebenfalls von der Größe der Beugungsordnungen in der Maskenebene beeinflusst, was beim Maskendesign zu beachten ist. Generell ist es daher vorteilhaft, die Maske so weit wie möglich in der Pupillenebene zu platzieren, um diese Effekte zu minimieren.

Abb. 12 zeigt eine über ein Getriebe gekoppelte Anordnung von Blende und der Phasenmaske. Die Gesamte Anordnung befindet sich in oder in der Nähe der Pupille des Objektivs. Die Blende zur Selektion der Beugungsordnung (links in Abb. 12) kann eine Gestalt wie in Abb. 3 illustriert haben. Die Phasenmaske (rechts in Abb. 12) kann wie in Abbildung 10 dargestellt gestaltet werden. Das Getriebe koppelt beide Elemente und kann in der Nähe der optischen Achse oder aber am Rand von Blende bzw. Maske sitzen. Die Halterung der Blende bzw. Maske kann dabei selbst als Zahnrad ausgeführt sein, welches um die optische Achse drehbar angeordnet ist.

Entsprechend der Erfindung kann die Lichtverteilung in der Pupille nicht durch Beugung an einer periodischen Struktur, sondern direkt durch Anordnung von optischen Fasen in der Pupille des Objektivs erzeugt werden Eine solche Anordnung ist in Abbildung 13 dargestellt. Hier sind in der Nähe der Pupille n (hier n = 6) Ausgänge der Faseroptiken (FO) angeordnet, welche durch einen Faserhalter (FH) in Position gehalten werden. Die optische Achse (OA) steht hierbei senkrecht zur Zeichenebene und (PB) stellt die Pupillenbegrenzung dar. Jeder der Ausgänge der Faseroptiken (FO) kann hierbei eine mikrooptische Einheit, wie zum Beispiel eine Mikrolinse, eine strukturierte Oberfläche oder aber eine spezielle Beschichtung enthalten.

Abb. 13 zeigt die Ansicht einer Ebene senkrecht zur optischen Achse (OA), in welcher die n Ausgänge von Faseroptiken (FO) mittels eines ringförmigen Faserhalters (FH) platziert sind. Hierbei markiert (PB) die Begrenzung der Pupille.

Die Anordnung von Fasern in der Pupille hat den Vorteil, dass die Orientierung der Beleuchtungsstruktur in der Probe sehr schnell durch Schaltung des Lichtes auf bestimmte Faserausgänge bestimmt werden kann. Dies kann zum Beispiel durch die elektronische Schaltung von Lichtquellen erfolgen, welche den einzelnen Faserausgängen zugeordnet sind. Des Weiteren kann der Faserschalter (FSE) so aufgebaut sein, dass das Licht schnell zwischen den einzelnen Fasereingängen geschaltet werden kann (durch schaltbare Kopplung oder Blockung des Lichtes).

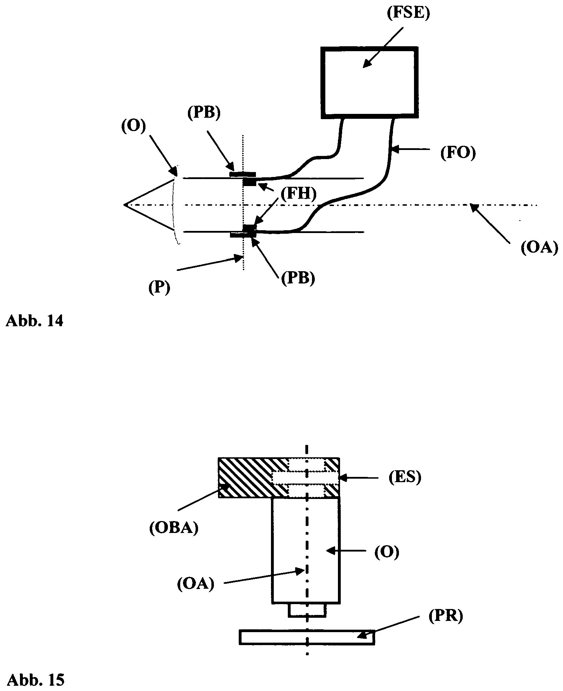

Abb. 14 zeigt eine Seitenansicht zur Illustration der Faser-Basierten Implementierung der strukturierten Beleuchtung: Die optische Achse (OA) des Objektives (O) verläuft durch die Pupille (P) des Objektives. Die Faseroptiken (FO) werden mittels des Faserhalters (FH) in der Nähe der Pupillenbegrenzung (PB) positioniert und gehalten. In dieser Illustration sind nur zwei Faseroptiken dargestellt, es kann jedoch auch eine größere Anzahl verwendet werden. Die Faserschalteinheit (FSE) kann Licht auf eine bestimmte Fasern schalten und auch die relative Phase des von den Faseroptiken emittierten Lichtes einstellen.

In Abbildung 14 wird eine solche Anordnung zur strukturierten Beleuchtung mittels Faser-Implementierung dargestellt. Es ist eine seitliche Ansicht gezeigt, wobei die optische Achse in der Zeichenebene liegt. Die Ausgänge der Faseroptiken (FO) sind in der Nähe der Pupille (P) des Objektivs (O) angeordnet, wobei (PB) die Pupille begrenzt. Zur vereinfachten Darstellung wurden in der Abbildung nur zwei Fasern eingezeichnet, wobei jedoch eine größere Anzahl vorhanden sein kann. Die Faserschalteinheit (FSE) hat dabei mehrere Funktionen: sie enthält eine Lichtquelle und / oder Möglichkeiten zur Manipulation der spektralen Zusammensetzung des eingesetzten Lichtes. Weiterhin kann die Einheit (FSE) das Licht selektiv auf eine Kombination bestimmter Fasern verteilen und auch die relative Phasenlage des Lichtes zwischen den aktiven Ausgängen der Faseroptiken (FO) steuern.

Wie bereits zuvor erwähnt ist die Pupille des Objektivs nicht immer direkt zugänglich. Es kann deshalb unabhängig von der Implementierung (z.B. Faseranordnung oder Nutzung von Phasenplatten) notwendig sein, die Pupille durch eine Zwischenabbildung zugänglich zu machen. Eine solche Zwischenabbildung ist Stand der Technik und kann mit Hilfe Zwischenoptiken realisiert sein. Im Vorliegenden Dokument wurde bisher im Interesse der Klarheit der Illustrationen auf die Darstellung entsprechender Zwischenoptiken verzichtet. Diese Zwischenoptiken können jedoch verwendet werden, wenn es die Gegebenheiten der optischen Anordnung erfordern.

Ein weiteres Ausführungsbeispiel entsprechend der vorliegenden Erfindung nutzt eine Kombination aus optischen Fasern und einer Mikrooptik, um das beschriebene Verfahren zur strukturierten Beleuchtung zu realisieren und die erforderlichen Beleuchtungsverteilungen in der Pupille zu erzeugen. Insbesondere bei Mikroskop-Objektiven befindet sich die Ebene der Objektivpupille meist innerhalb des Objektivs, kann jedoch durch eine Zwischenabbildung zugänglich gemacht werden. Die hier beschriebene Anordnung realisiert die Generierung der Beleuchtungsverteilung und die Aufgabe der Zwischenabbildung auf besonders kompakte Weise und ist daher besonders zur Integration in bestehende Mikroskopsysteme geeignet. Abbildung 15 zeigt die Seitenansicht eines Mikroskopobjektives (O) mit einem seitlichen Einschubschacht (ES), welcher oft für die Aufnahme von DIC Prismen (Differential Interference Contrast) verwendet wird. Der mechanische Einschubschacht (ES) innerhalb der Objektivaufnahme (OBA) ist dabei oft Teil des Objektivrevolvers.

Abb. 15 zeigt eine Seitenansicht zur Erläuterung der Modifikation eines bestehenden optischen Mikroskopsystems. Optische Achse (OA), Objektiv (O), Probe (PR), Objektivaufnahme (OBA), Einschubschacht (ES).

Im Folgenden wird nun eine Komponente beschrieben, welche vorzugsweise am Ort des Einschubschachtes (ES) in Abbildung 15 eingebracht wird und die erfindungsgemäße Aufgabe zur Erzeugung von Beleuchtungsverteilungen in der Pupille löst.

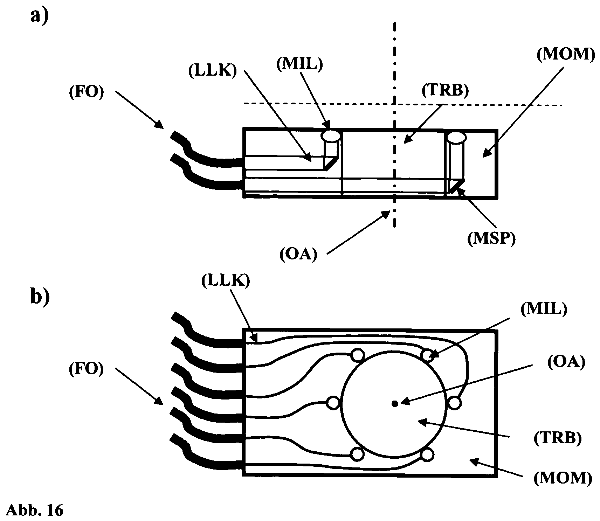

Abbildung 16 zeigt ein Mikrooptikmodul (MOM) in der Seitenansicht a) und in der Draufsicht mit einer Blickrichtung senkrecht zur optischen Achse b). Das Mikrooptische Modul (MOM) ist dabei bevorzugt an die Faseroptiken (FO) gekoppelt und kann eine Kombination der folgenden mikrooptische Komponenten enthalten: optische Lichtleiter, optische Strahlteiler, mikrooptisch integrierte Spiegel, Mikrolinsen.

In der Illustration in Abbildung 16 sind die Faseroptiken (FO) mit den Lichtleitkanälen (LLK) verbunden. Das gesamte Modul (MOM) kann in den in Abb. 15 dargestellten Einschubschacht (ES) eingesetzt werden, wobei die obere Seite des Moduls dabei dem Objektiv zugewandt ist. (OA) kennzeichnet die optische Achse des Objektivs. Mikrooptisch integrierte Spiegel (MSP) können zur Umlenkung des von den Faseroptiken (FO) eingekoppelten Lichtes genutzt werden. Die Mikrolinsen (MIL) geben das eingekoppelte Licht ab und fokussieren es vorzugsweise in die Pupillenebene des Objektivs (nicht dargestellt).

Abb. 16 dient zur Illustration eines Mikrooptischen Moduls (MOM). Die Ansicht a) ist eine Seitenansicht senkrecht zur optischen Achse (OA) des Mikroskopobjektivs (Abb. 15). b) ist eine Draufsicht des Moduls. Dies gesamte Anordnung kann in den in Abb. 15 dargestellten Einschubschacht (ES) eingesetzt werden. Die mit (OA) gekennzeichnete Achse gilt für den eingesetzten Zustand und ist in Abb. 15 definiert. Die Faseroptiken (FO) sind mit den Lichtleitkanälen (LLK) verbunden. Mikrooptisch integrierte Spiegel (MSP), Mikrolinsen (MIL) und vorzugsweise kreisförmiger transparenter Bereich (TRB).

Obwohl die Lichtleitkanäle (LLK) in Abb. 16 a) der Anschaulichkeit halber übereinander angeordnet dargestellt sind, ist es vorteilhaft, sie in einer Ebene anzuordnen. Der transparente Bereich (TRB) ist für das vom Objektiv kommende und zu detektierende Licht durchlässig. In Abb. 16 ist er kleiner dargestellt als der kreisförmige Bereich, der von den Mikrolinsen (MIL) aufgespannt wird. Das vom Objekt kommende Licht wird zumindest diesen Bereich ausfüllen. Es kann daher vorteilhaft sein, den transparenten Bereich so groß auszulegen, wie dem maximal ausgeleuchteten Bereich an dieser Stelle entspricht. Da die Mikrolinsen (MIL) und alle Kanäle (LLK) Verluste verursachen ist dann eine auf Transmission optimierte Bauweise (z.B. durch die Auslegung der Kanäle als Wellenleiter) zu bevorzugen. Vorzugsweise ist er als Aussparung im Substrat des mikrooptischen Moduls (MOM) realisiert. Es ist vorteilhaft, wenn jeder Mikrolinse (MIL) genau eine Faseroptik (FO) zugeordnet ist. In Abbildung 16 b) sind die Lichtleitkanäle (LLK), welche die Verbindung zwischen den Faseroptiken (FO) und den Mikrolinsen (MIL) bilden sowie die mikrooptisch integrierten Spiegel (MSP) nicht im Detail sondern nur schematische durch Linien (LLK) dargestellt. Die Faseroptiken (FO) sind vorzugsweise mit einer Faserschalteinheit (FSE) verbunden, wie sie in Abbildung 14 dargestellt und im dazugehörigen Text erläutert ist. Diese Faserschalteinheit ermöglicht es, das Licht in den einzelnen Faseroptiken (FO) gezielt zu schalten, wobei die relative Intensität in den Faseroptiken sowie auch die relative Phase des Lichtes in den einzelnen Kanälen eingestellt werden kann. Eine solche Faserschalteinheit kann auf Piezo-Aktuatoren beruhen. Um punktförmige Lichtverteilungen am Ort der Pupillenebene des Objektivs zu erzeugen, kann die Brennweite der verwendeten Mikrolinsen (MIL) entsprechend angepasst.

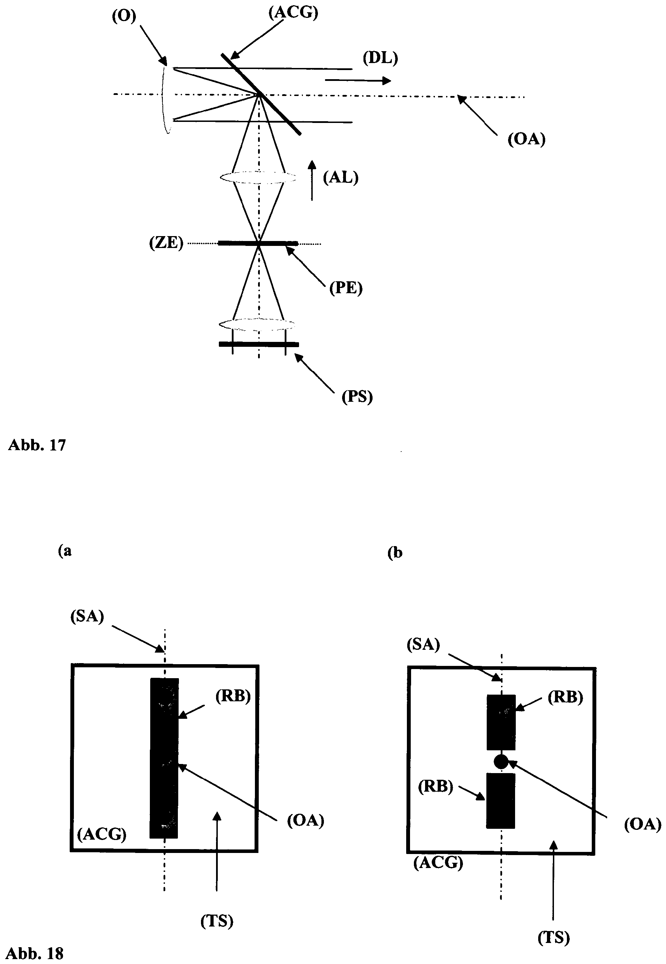

In einem weiteren Ausführungsbeispiel soll eine Anordnung erläutert werden, welche einerseits die Pupille durch eine Zwischenabbildung zugänglich macht und andererseits die Nutzung eines achromatischen Farbteilers mit hoher Effizienz (wie in [10] beschrieben) ermöglicht. Eine entsprechende optische Anordnung ist in Abb. 17 dargestellt. Die periodische Struktur (PS) welche wie in Abb. 1 gezeigt gestaltet sein kann, wird beleuchtet und das Beugungsbild mit Hilfe von optischen Elementen in eine Zwischenebene (ZE) abgebildet, welche konjugiert zur Pupille des Objektives ist und in welcher sich auch die Phasenelement (PE) befindet. Die Beugungsordnungen der periodischen Struktur werden vorzugsweise in die Zwischenebene (ZE) fokussiert. Das Phasenelement (PE) kann dabei wie in Abb. 4, 5 bzw. 8 gestaltet sein und ist vorzugsweise beweglich angeordnet. Aufgabe des Phasenelementes ist wie beschrieben die Einstellung der relativen Phasenlage der Beugungsordnungen zueinander. Mittels einer weiteren Zwischenoptik wird die Zwischenebene (ZE) auf den Strahlteiler (ACG) abgebildet. Dieses Element (ACG) besteht aus einem transparenten Substrat mit einem oder mehreren reflektierenden Bereichen wie in Abb. 18 dargestellt. Das Prinzip des achromatischen Strahlteilers ist in [10] beschrieben, Details werden in einem weiter unten folgenden Ausführungsbeispiel diskutiert. Vom Strahlteiler (ACG) wird das Anregungslicht (AL) zum Objektiv (O) geleitet. Das detektierte Licht (DL), welches vorzugsweise Fluoreszenzlicht ist, gelangt durch die transparenten Bereiche des Strahlteilers und wird einer entsprechenden Detektionseinheit zugeführt, welche einen Flächenempfänger enthalten kann. Vorzugsweise ist der achromatische Strahlteiler (ACG) in oder in der Nähe der Pupille des Objektivs (O) oder einer konjugierten Ebene des Strahlengangs angeordnet.

Abb. 17 zeigt die vorteilhafte Kombination einer Ausgestaltung mit dem Konzept des Achromatischen Strahlteilers. Optische Achse (OA), Objektiv (O), Anregungslicht (AL), Detektionslicht (DL), Zwischenebene (ZE), Periodische Struktur (PS), Phasenelement (PE), Achromatischen Strahlteiler (ACG).

Im folgenden Abschnitt soll ein Ausführungsbeispiel für einen achromatischen Strahlteiler (ACG) [10] beschrieben werden, wie er in der Anordnung entsprechend Abb. 17 eingesetzt werden kann. In der Abb. 18 sind zwei Varianten a) und b) des achromatischen Strahlteilers (ACG) dargestellt. Es handelt sich um ein transparentes Substrat (TS) mit reflektierenden Bereichen (RB). Das Element (ACG) ist dabei derart angeordnet, dass (OA) den Durchstoßpunkt der optischen Achse durch das Substrat (TS) kennzeichnet und die Symmetrieachse (SA) des Elementes (ACG) in Abbildung 17 senkrecht zur Zeichenebene liegt. Die beiden Varianten a) und b) unterscheiden sich dadurch, dass Element a) auf der optischen Achse (OA) reflektiert, wahrend die Ausführung b) im Bereich der optischen Achse nicht reflektiert und eine hohe Transmission besitzt. Der Ort der optischen Achse ist auch gleichzeitig die Lage der nullten Beugungsordnung. Bei Variante b) wird durch die Transparenz an dieser Stelle die nullte Ordnung nicht reflektiert und gelangt somit nicht als Anregungslicht auf die Probe. Dies kann den Kontrast der Beleuchtungsstruktur auf der Probe erhöhen. Der achromatische Strahlteiler (ACG) kann weiterhin derart gestaltet sein, dass er die reflektierenden Bereiche entlang der Symmetrieachse (SA) eine Strukturierung aufweisen und somit bestimmte Beugungsordnungen bzw. Wellenlängen selektieren und reflektieren. Wenn ein Element (ACG) wie in Abb. 7 dargestellt nichtbeweglich angeordnet ist, kann es nur zur Strukturierung der Beleuchtung in einer Raumrichtung eingesetzt werden. Bei Rotation der Strukturierungsrichtung ist notwendig, das Element ebenfalls zu drehen. Analog könnten auf einem Filterrad angeordnete Elemente mit verschiedener Orientierung der reflektiven Struktur in den Strahlengang eingeschwenkt werden. Eine weitere Option ist ein Element mit kreisförmigen reflektiven Bereichen in mehreren Richtungen wie in Abb. 2 zu verwenden. Dabei ist für die Dimensionierung der Größe der Bereiche die wellenlängenabhängige Lage der Beugungsordnungen und die Lage der Bereiche mit Bezug auf den durch (AL) erzeugten Fokus der Ordnungen zu beachten.

Abb. 18 zeigt die Gestaltung des achromatischen Strahlteilers (ACG). Auf einem transparenten Substrat (TS) befinden sich reflektierende Bereiche (RB). Die Symmetrieachse (SA) verläuft durch den Durchstoßpunkt der optischen Achse (OA). Als Punkte sind die Beugungsordnungen eingezeichnet, wobei die nullte Ordnung auf der optischen Achse liegt.

Es ist zusätzlich hervorzuheben, dass die vorliegende Erfindung zwar vorzugsweise in der Mikroskopie eingesetzt werden kann, jedoch nicht auf diese beschränkt ist. Eine solche Anordnung zur strukturierten Beleuchtung kann aufgrund der Fähigkeit zum Optischen Schneiden auch in anderen Anwendungen von Nutzen sein, welche eine 3D Abbildung bzw. Abtastung erfordern. Dies sind zum Beispiel die Oberflächenvermessung oder aber auch medizinische Anwendungen wie zum Beispiel die Endoskopie. Bio-chip-reader und high throughput screening sind ebenfalls mögliche Anwendungen, wobei ebenfalls die beschriebenen Anordnungen zum Einsatz kommen können. Eine Anwendung der Erfindung ist in der Mikroskopie und insbesondere in der Fluoreszenzmikroskopie und / oder zur Beobachtung lebender Zellen von Vorteil. In der Medizin ist zum Beispiel die Abbildung der Retina des Auges (Fundus-Bildgebung) eine vorteilhafte Anwendung.

Es können verschiedene Beleuchtungsverfahren und Probenwechselwirkungen genutzt werden. Diese beinhalten zum Beispiel Fluoreszenz, Lumineszenz und auch Reflektion. Die Anordnung zur strukturierten Beleuchtung kann außerdem mit dem bekannten TIRF Verfahren (Total Internal Reflection) kombiniert werden, wobei die Strukturierung der Beleuchtung auf das evaneszente Anregungslicht angewendet wird [12]. Dies kann dadurch erreicht werden, dass die Beugungsordnungen (siehe Abb. 2) bzw. die Faseranordnungen (Abb. 13) bzw. das mikrooptische Modul (Abb. 16) in der Pupille in einem radialen Abstand angeordnet werden, sodass die daraus resultierenden Winkel im Objektraum den kritischen Winkel der Totalreflexion überschreiten.

Als Lichtquelle für die erfindungsgemäße Anordnung können verschieden Ausführungen bzw. Kombinationen daraus gewählt werden: Quecksilberdampflampe (HBO), Laser, Laserdioden, Leuchtdioden oder Kontinuumslichtquelle (white light source). In einer Implementierung der Erfindung kann die Lichtquelle eine der oben genannten Formen annehmen, ist jedoch nicht auf diese beschränkt.

Eine hervorzuhebende medizinische Anwendung des beschriebenen Verfahrens zur strukturierten Beleuchtung ist die Fundusbildgebung am Auge Hier kann das Verfahren der strukturierten Beleuchtung zur Reduktion von Streu- und Untergrundlicht vorteilhaft eingesetzt werden und somit der Kontrast der gelieferten Bilder wesentlich erhöht werden. Bei der Abbildung der Retina des Auges ist weiterhin die numerische Apertur und auch die damit verbundene Auflösung durch die physiologischen Gegebenheiten des Auges eingeschränkt (beschränkte nutzbare Pupillengröße). Die Verwendung einer kleineren Apertur ist jedoch trotz der geringeren optischen Auflösung wünschenswert, um Abbildungsfehler aufgrund der natürlichen Imperfektionen des Auges zu reduzieren. Die strukturierte Beleuchtung kann deshalb sinnvoll mit dem Ziel der Auflösungssteigerung eingesetzt werden. Somit können Bilder der Retina mit höherer Auflösung ohne eine (schwierige bzw. mit Nachteilen verbundene) Erhöhung der physikalischen Apertur des Systems erzeugt werden. Dies kann zur wünschenswerten Auflösung von Details der Retina (Stäbchen / Zäpfchen) führen und somit einen zusätzlichen Nutzen für die medizinische Diagnose darstellen.

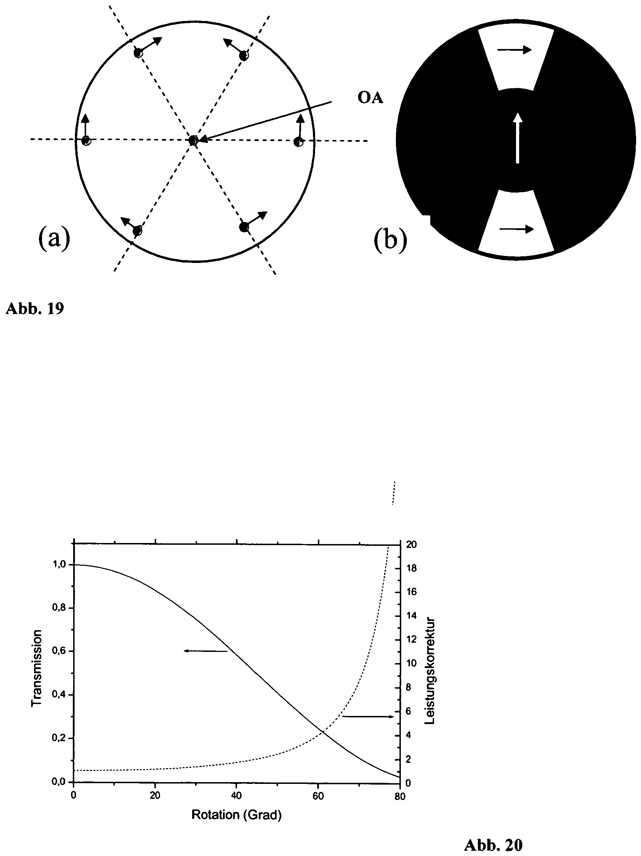

Eine wesentliche Eigenschaft für alle diskutierten Anwendungen ist die Erzeugung einer strukturierten Beleuchtung mit möglichst hohem Kontrast der Strukturierung in der Objektebene. Durch die Verwendung kohärenten Lichts wird prinzipiell eine 100-prozentige Modulation möglich. Allerdings spielt bei der Verwendung von Optiken mit höheren numerischen Aperturen, wie sie in der Mikroskopie üblich sind, die Polarisation für die Interferenz in der Objektebene - und damit den Kontrast der strukturierten Beleuchtung - eine entscheidende Rolle. Ein maximaler Kontrast ist nur dann möglich, wenn die Polarisation des Beleuchtungslichtes senkrecht zur Verbindungslinie der Beugungsordnungen in der Pupillenebene (d.h. parallel zur Lage der Streifenstruktur in einer Bildebene) steht, wie in Abb. 19 dargestellt. Die entsprechende Polarisation des Beleuchtungslichtes muss daher entweder synchron zur Rotation der Blende mitgedreht werden, oder es wird azimuthal polarisiertes Licht benutzt. Ersteres kann bevorzugt durch die Rotation einer $\lambda/2$-Platte im Strahlengang des linear polarisierten Anregungslichts erzeugt werden, wobei der jeweilige Rotationswinkel der Wellenplatte halb so groß wie der der Blendenstruktur ist. Entsprechend ist eine rotierbare Wellenplatte im Strahlengang von Abb. 11 zwischen Quelle (23) und Hauptfarbteiler (13) vorzusehen. In den faseroptischen Anordnungen von Abb. 14-16 wird durch die geeignete Orientierung polarisationserhaltender Fasern für die korrekte Polarisation gesorgt. Azimuthal polarisiertes Licht kann durch verschiedene, aus dem Stand der Technik bekannte Methoden aus linear polarisiertem Licht erzeugt werden, ein Beispiel ist in [11] gegeben. Licht dieses Polarisationszustandes erlaubt insbesondere die Verwendung einer Beleuchtung mit einer simultanen Strukturierung in mehreren Raumrichtungen. Alternativ kann die rotierende Maske auch mit einem Polarisator versehen werden, der wie in Abb. 19 gezeigt nur linear polarisiertes Licht transmittiert. Dies bedeutet ein rotationsabhängiger Lichtverlust, siehe Abb. 20, der durch eine geeignet synchronisierte Lichtmodulation kompensiert werden kann.

Abb. 19 zeigt in (a) die durch die in Abbildung 1 dargestellte Struktur in der Pupille erzeugte Lichtverteilung. Die grün eingezeichneten Punkte sind die Orte der Beugungsordnungen und der rote Ring zeigt die Begrenzung der Pupille an. Durch Pfeile sind die optimalen Polarisationszustände des Lichtes angegeben. Falls die 0. Ordnung zur Interferenz in der Objektebene beiträgt, muss diese die entsprechend gleiche Polarisation haben wie die höheren Ordnungen jeweils entlang der gestrichelten Linie.

(b) zeigt die Orientierung eines Polarisators in der Maske und die bevorzugte lineare Eingangspolarisation des Lichtes.

Abb. 20 zeigt die Transmission durch einen Polarisator in der Maske wie in Abb. 19 gezeigt und Korrektur der Verluste durch Leistungsregelung als Funktion des Rotationswinkels (bei 0 Grad fallen die Achse des Polarisators und die Eingangspolarisation zusammen.

**Literaturverweise**

[1] Neil M.A.A., Juskaitis R., Wilson T.: "Method of obtaining optical sectioning by using structured light in a conventional microscope", Opt.Lett. 22 (24): 1905-1907, 1997

[2] Lukosz W., Marchand M., "Optische Auflösung unter Überschreitung der beugungsbedingten Auflösungsgrenze", Optica Acta 16, 241-255, 1963

[3] Heintzmann R., Cremer C., "Laterally modulated excitation microscopy: improvement of resolution by using a diffraction grating", in Proc. of SPIE 3568: 185-196, 1998

[4] Neil M.A.A., Juskaitis, A., Wilson, T., "Real time 3D fluorescence microscopy by two beam interference illumination", Opt. Comm. 153: 1-4, 1998

[5] Heintzmann R., Jovin T.M., Cremer C., "Saturated patterned excitation microscopy - a concept for optical resolution improvement" JOSA A, 19 (8): 1599-1609, 2002

[6] Gustafsson, M.G.L., Agard, D.A., Sedat, J.W., "Doubling the lateral resolution of wide-field fluorescence microscopy by structured illumination", in Proc. of SPIE 3919: 141-150, 2000

[7] Gustafsson M.G.L. , "Nonlinear structured-illumination microscopy: wide-field fluorescence imaging with theoretically unlimited resolution", PNAS 102: 13081-13086, 2005

[8] GERSTNER VOLKER (DE); HECHT FRANK (DE); LANGE RALPH (DE); BLOOS HELMUT (DE), "Assembly for increasing the depth discrimination of an optical imaging system", US2003086067, WO0212945

[9] WILSON TONY (GB); NEIL MARK ANDREW AQUILLA (GB); JUSKAITIS RIMVYDAS (GB), "Microscopy imaging apparatus and method", US6376818, 2002

[10] KEMPE MICHAEL (DE); WOLLESCHENSKY RALF (DE): "Optical system for microscopy comprises focussing the illuminating light on the sample at the plane between it and the eye pupil, with separation of the emitted detection light on or near the same plane", DE10257237

[11] M. Stalder und M. Schadt, " Linearly polarized light with axial symmetry generated by liquid-crystal polarization converters", Opt. Lett. 21 (1996), 1948-1950

[12] George E. Cragg and Peter T. C. So, "Lateral resolution enhancement with standing evanescent waves", Opt.Lett. 25 (2000), 46-48

**Patentansprüche**

1. Anordnung zur optischen Erfassung einer beleuchteten Probe,
wobei das Beleuchtungslicht durch ein Objektiv in mindestes einer Ebene räumlich strukturiert auf die Probe trifft und mehrere Bilder von der Probe bei unterschiedlicher Lage der Struktur auf der Probe mittels eines Detektors aufgenommen werden, aus denen ein optisches Schnittbild und/ oder ein Bild mit erhöhter Auflösung berechnet wird,
**dadurch gekennzeichnet, dass** in oder in der Nähe einer Pupille des Objektivs oder einer dazu konjugierten Ebene Mittel zur Erzeugung einer Lichtverteilung in oder in der Nähe der Pupille, die auf der Probe eine strukturierte Beleuchtungswirkung erzeugt, angeordnet sind, wobei die Lichtverteilung durch Ausgänge von Faseroptiken gebildet ist,
die Faserausgänge eine Mikrostruktur aufweisen und
die Phasenlage der Strukturierung durch Mittel zur Änderung der Phase des aus den Fasern austretenden Lichts variierbar ist.

2. Anordnung nach Anspruch 1, wobei das Beleuchtungslicht durch Umschaltmittel in seiner spektralen Zusammensetzung variiert wird und/oder zwischen der Pupillenebene und den Faserausgängen eine Zwischenabbildung erfolgt.

3. Anordnung nach einem der vorangehenden Ansprüche, wobei ein Einschubmodul zur Aufnahme/Ankopplung von Faserenden in den Strahlengang des Mikroskops vorgesehen ist.

4. Anordnung nach einem der vorangehenden Ansprüche, wobei die Faserenden am Rand der Mikroskoppupille angeordnet sind und die Fasern beispielsweise senkrecht zur optischen Achse hintereinander angeordnet sind oder parallel zur optischen Achse übereinander angeordnet sind.

5. Anordnung nach einem der vorangehenden Ansprüche, wobei Spiegel zur Umlenkung des Lichts in Richtung der Probe vorgesehen sind.

6. Anordnung nach einem der vorangehenden Ansprüche, wobei die Lichtverteilung durch Mittel zur Umschaltung auf unterschiedliche Faserausgänge variierbar ist.

7. Anordnung nach einem der vorangehenden Ansprüche in einem Mikroskop, vorzugsweise einem Weitfeldmikroskop.

**Claims**

1. Arrangement for optically detecting an illuminated specimen,
wherein the illumination light is incident on the specimen through an objective lens with spatial structuring in at least one plane and a plurality of images of the specimen are recorded by means of a detector with different positions of the structure on the specimen, an optical sectional image and/or an image with an increased resolution being calculated from said images, **characterized in that** arranged in a pupil of the objective lens, or in the vicinity thereof, or in a plane conjugate thereto, are means for producing a light distribution in the pupil, or in the vicinity thereof, said light distribution producing a structured illumination effect on the specimen, wherein
the light distribution is formed by outputs of fibre optical units,
the fibre outputs have a microstructure and
the phase angle of the structuring is variable by means for changing the phase of the light emerging from the fibres.

2. Arrangement according to Claim 1, wherein the illumination light is varied in terms of its spectral composition by switchover means and/or intermediate imaging is implemented between the pupil plane and the fibre outputs.

3. Arrangement according to either of the preceding claims, wherein an insertion module is provided for receiving fibre ends in/coupling fibre ends into the beam path of the microscope.

4. Arrangement according to any one of the preceding claims, wherein the fibre ends are arranged at the edge of the microscope pupil and the fibres are arranged, e.g., in succession perpendicular to the optical axis or arranged one above the other parallel to the optical axis.

5. Arrangement according to any one of the preceding claims, wherein mirrors are provided for deflecting the light in the direction of the specimen.

6. Arrangement according to any one of the preceding claims, wherein the light distribution is variable by means for switching to different fibre outputs.

7. Arrangement according to any one of the preceding claims in a microscope, preferably a wide-field microscope.

**Revendications**

1. Dispositif de détection optique d'un échantillon éclairé,

dans lequel la lumière d'éclairage arrive sur l'échantillon en étant structurée spatialement à travers un objectif dans au moins un plan et plusieurs images de l'échantillon sont prises à une position différente de la structure sur l'échantillon au moyen d'un détecteur, images à partir desquelles une image de coupe optique et/ou une image à définition accrue est calculée, **caractérisé en ce que**,

dans ou à proximité d'une pupille de l'objectif ou d'un plan qui lui est conjugué, sont disposés des moyens de génération d'une répartition de la lumière dans ou à proximité de la pupille qui génère sur l'échantillon un effet éclairant structuré,

la répartition de la lumière étant constituée par des sorties d'optique à fibres,

les sorties à fibres présentant une microstructure et la position de phase de la structuration pouvant être variée par des moyens de modification de la phase de la lumière sortant des fibres.

2. Dispositif selon la revendication 1, dans lequel la lumière d'éclairage est variée par des moyens de permutation dans sa composition spectrale et/ou une reproduction intermédiaire a lieu entre le plan de la pupille et les sorties à fibres.

3. Dispositif selon une des revendications précédentes, dans lequel un module d'insertion destiné à recevoir/coupler des extrémités de fibres est prévu dans le parcours optique du microscope.

4. Dispositif selon une des revendications précédentes, dans lequel les extrémités des fibres sont disposées au bord de la pupille du microscope et les fibres sont disposées par exemple perpendiculairement à l'axe optique les unes derrière les autres ou parallèlement à l'axe optique les unes sur les autres.

5. Dispositif selon une des revendications précédentes, dans lequel des miroirs destinés à dévier la lumière en direction de l'échantillon sont prévus.

6. Dispositif selon une des revendications précédentes, dans lequel la répartition de la lumière peut être variée par des moyens de permutation sur des sorties à fibres différentes.

7. Dispositif selon une des revendications précédentes dans un microscope, de préférence un microscope à grand champ.

Abb. 1

Abb. 2

Abb. 3

**Abb. 4**

**Rotation der Masken /
Phasenstruktur**

**Abb. 5:**

Rotation der Masken /
Phasenstruktur

a) Phasenschritt 1      b) Phasenschritt 2      c) Phasenschritt 5

Linienorientierung 1

d) Phasenschritt 1      e) Phasenschritt 2      f) Phasenschritt 5

Linienorientierung 2

**Abb. 6** zur Selektion der Beugungsordnungen und Einstellung der relativen Phasenlage zwischen den Beugungsordnungen.

$\lambda_1$

$\lambda_2$

OA

**Abb. 7**

Kreissektor 2

Kreissektor 1

Kreissektor P

Radiale Entfernung r1

Radiale Entfernung r2

Beugungsordnungen
● Wellenlänge $\lambda 1$ /r1
● Wellenlänge $\lambda 2$ /r2

Optische Achse,
Koordinatenursprung für
radiale Entfernung

**Abb. 8**

r

optische
Weglänge

**Abb. 9**

Phasenstufen

Rotation
der Maske

**Abb. 10**

(1) (5) (9) (7) (21) (19) (23)

(13)

(3)

(17)

(15)

(11)

(25)

**Abb. 11**

Rotierbar angeordnete
Phasenmaske in einer
Pupillenebene

Rotierbar angeordnete
Blende

Licht von der Lichtquelle

Getriebe zur Kopplung
der beiden Elemente

Optische
Achse

**Abb. 12**

(FH)

(FO)
(1..n)

(OA)

(PB)

**Abb. 13**

(FSE)

(O)

(PB)

(FO)

(FH)

(OA)

(P)

(PB)

**Abb. 14**

(OBA)

(ES)

(O)

(OA)

(PR)

**Abb. 15**

a)

(FO)

(LLK) (MIL) (MOM)

(TRB)

(OA) (MSP)

b)

(LLK)

(FO)

(MIL)

(OA)

(TRB)

(MOM)

Abb. 16

(O) (ACG)

(DL)

(OA)

(AL)

(ZE)

(PE)

(PS)

**Abb. 17**

(a

(b

(SA)

(RB)

(OA)

(ACG)

(TS)

(SA)

(RB)

(RB)

(OA)

(ACG)

(TS)

**Abb. 18**

**Abb. 19**

**Abb. 20**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070206276 A1
- WO 2007043382 A1
- EP 1933186 A1
- US 2003086067 A
- WO 0212945 A
- US 6376818 B
- DE 10257237

**In der Beschreibung aufgeführte Nicht-Patentliteratur**

- **NEIL M.A.A. ; JUSKAITIS R. ; WILSON T.** Method of obtaining optical sectioning by using structured light in a conventional microscope. *Opt.Lett.,* 1997, vol. 22 (24), 1905-1907
- **LUKOSZ W. ; MARCHAND M.** Optische Auflösung unter Überschreitung der beugungsbedingten Auflösungsgrenze. *Optica Acta,* 1963, vol. 16, 241-255
- **HEINTZMANN R. ; CREMER C.** Laterally modulated excitation microscopy: improvement of resolution by using a diffraction grating. *Proc. of SPIE,* 1998, vol. 3568, 185-196
- **NEIL M.A.A. ; JUSKAITIS, A. ; WILSON, T.** Real time 3D fluorescence microscopy by two beam interference illumination. *Opt. Comm.,* 1998, vol. 153, 1-4
- **HEINTZMANN R. ; JOVIN T.M. ; CREMER C.** Saturated patterned excitation microscopy - a concept for optical resolution improvement. *JOSA A,* 2002, vol. 19 (8), 1599-1609
- **GUSTAFSSON, M.G.L. ; AGARD, D.A. ; SEDAT, J.W.** Doubling the lateral resolution of wide-field fluorescence microscopy by structured illumination. *Proc. of SPIE,* 2000, vol. 3919, 141-150
- **GUSTAFSSON M.G.L.** Nonlinear structured-illumination microscopy: wide-field fluorescence imaging with theoretically unlimited resolution. *PNAS,* 2005, vol. 102, 13081-13086
- **M. STALDER ; M. SCHADT.** Linearly polarized light with axial symmetry generated by liquid-crystal polarization converters. *Opt. Lett.,* 1996, vol. 21, 1948-1950
- **GEORGE E. CRAGG ; PETER T. C. SO.** Lateral resolution enhancement with standing evanescent waves. *Opt.Lett.,* 2000, vol. 25, 46-48